# EUROPEAN PATENT APPLICATION

(11) **EP 4 685 935 A1**
(43) Date of publication of application: **28.01.2026**
(21) Application number: 24222686.8
(22) Date of filing: 21.12.2024
(51) Int. Cl.: H01M 50/00

(54) **BATTERY PACK CASING AND BATTERY PACK**

(30) Priority: 24.07.2024 CN 202421766136 U; 09.09.2024 WO PCT/CN2024/117678
(71) Applicant: Eve Energy Co., Ltd., Huizhou, Guangdong 516006 (CN)
(72) Inventor: YANG, Peng, HUIZHOU 516006 (CN); YANG, Kaibo, HUIZHOU 516006 (CN)
(74) Representative: Regimbeau

(57) **Abstract**

Provided are a battery pack casing and a battery pack. The battery pack casing includes an enclosure (1), an upper cover plate (2), a bottom protective plate (3), and at least one pressure relief valve (5). The bottom protective plate (3) includes an upper plate (31), a lower plate (32), and multiple connecting platforms (33) to form a pressure relief chamber (34). The upper plate (31) also has multiple pressure relief holes (311) that communicate with the pressure relief chamber (34). A buffer chamber (11) that communicates with the pressure relief chamber (34) is disposed in the enclosure (1). The at least one pressure relief valve (5) is disposed on the enclosure (1) and communicates with the buffer chamber (11).

## Description

### TECHNICAL FIELD

The present application relates to the field of battery technology, for example, a battery pack casing and a battery pack.

### BACKGROUND

As the demand for power supply continues increasing, multiple batteries are often combined to improve the power delivery efficiency, and the form of a battery pack is used for energy supply. Over time, the temperature of a battery cell rises during prolonged use, not only affecting the power efficiency of the battery cell but also leading to pressurized gas generated within the battery due to the temperature increase. When the pressure becomes too high, there is a safety risk of explosion. Therefore, pressure relief valves are installed on battery cells to ensure that when internal pressure becomes excessive, gas from thermal runaway can break through the pressure relief valves, thereby providing pressure relief protection for the interior of the batteries.

A battery pack is a relatively enclosed environment that contains multiple interconnected battery cells as well as electrical modules used for management. When the internal pressure of one battery cell becomes too high, causing the thermal-runaway gas to break through the pressure relief valve, then the gas may move throughout the battery pack, damaging other battery cells and the electrical modules used for management.

### SUMMARY

In a first aspect, an embodiment of the present application provides a battery pack casing. The battery pack casing includes an enclosure, an upper cover plate, a bottom protective plate, and at least one pressure relief valve.

The bottom protective plate includes an upper plate, a lower plate, and multiple connecting platforms. The multiple connecting platforms are spaced apart from each other and disposed between the upper plate and the lower plate so that a pressure relief chamber is formed between the upper plate and the lower plate. The upper plate is configured to support multiple batteries and has multiple pressure relief holes in one-to-one correspondence with multiple explosion-proof valves on the multiple batteries. The multiple pressure relief holes communicate with the pressure relief chamber.

The bottom protective plate is connected to one side of the enclosure. A buffer chamber that communicates with the pressure relief chamber is disposed in the enclosure.

The at least one pressure relief valve is disposed on the enclosure and communicates with the buffer chamber.

The top cover plate is connected to another side of the enclosure and cooperates with the bottom protective plate to form an accommodation chamber for accommodating the plurality of batteries.

In a second aspect, an embodiment of the present application provides a battery pack. The battery pack includes the battery pack casing of the first aspect.

The present application provides a battery pack casing. Multiple connecting platforms are disposed between the upper plate and the lower plate so that the pressure relief chamber that communicates with pressure relief holes on the upper plate is formed between the upper plate and the lower plate. A buffer chamber that communicates with the pressure relief chamber is disposed in the enclosure, and at least one pressure relief valve that communicates with the buffer chamber is disposed on the enclosure, so that after breaking through explosion-proof valves, the thermal-runaway gas in the battery passes through pressure relief holes, enters the pressure relief chamber and the buffer chamber in sequence, and then is released to the outside through the at least one pressure relief valve connected to the enclosure. In this manner, not only the internal pressure gas of the battery can be released but also the escape path of the thermal-runaway gas can be restricted, thus preventing gas movement that damages internal components and enhancing protection and safety.

The present application also provides a battery pack that uses the battery pack casing to control the thermal-runaway gas, preventing damage to the internal components of the battery pack from the impact of the thermal-runaway gas, improving protection of the internal components and prolonging the service life of the battery pack.

### BRIEF DESCRIPTION OF THE DRAWINGS

FIG. 1 is an exploded view of a battery pack according to the present application.
FIG. 2 is a section view of a battery pack according to the present application.
FIG. 3 is an exploded view of a bottom protective plate of a battery pack casing according to the present application.
FIG. 4 is a view illustrating the structure of an upper plate of a bottom protective plate of a battery pack casing according to the present application.
FIG. 5 is a view illustrating the structure of a lower plate of a bottom protective plate of a battery pack casing according to the present application.
FIG. 6 is a view illustrating the structure of an upper cover plate of a battery pack casing according to the present application.
FIG. 7 is a view illustrating the structure of a securing support of a battery pack casing according to the present application.
FIG. 8 is a section view taken along A-A of FIG. 7.

### Reference list:

- 100: battery
- 1: enclosure
- 11: buffer chamber
- 12: first pressure relief window
- 13: lateral plate
- 14: limiting protrusion
- 2: upper cover plate
- 21: second connecting flange
- 3: bottom protective plate
- 31: upper plate
- 311: pressure relief hole
- 312: second pressure relief window
- 313: welding through hole
- 32: lower plate
- 321: accommodation recess
- 322: first connecting flange
- 323: positioning hole
- 33: connecting platform
- 34: pressure relief chamber
- 35: limiting groove
- 4: securing support
- 41: mounting hole
- 42: insertion protrusion
- 5: pressure relief valve

### DETAILED DESCRIPTION

To reduce the adverse effects of the thermal-runaway gas and improve the protection and safety of the internal components of a battery pack, an embodiment provides a battery pack casing.

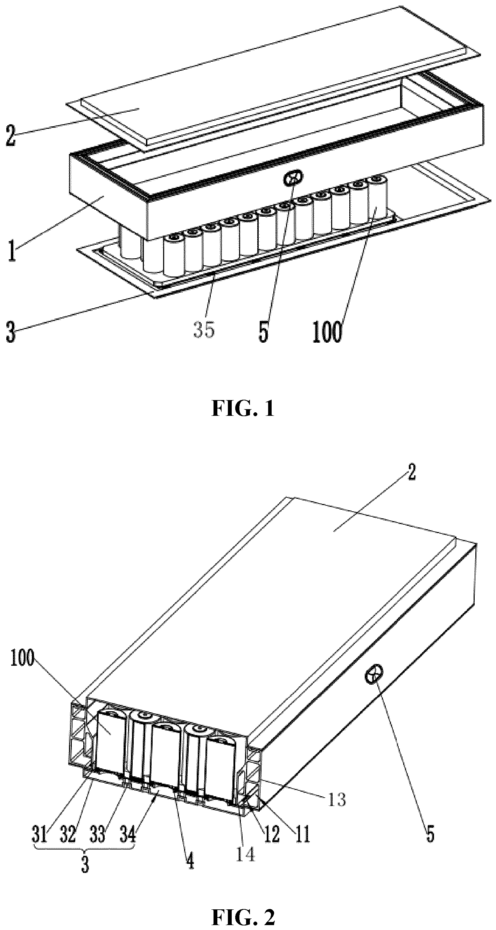

As shown in FIGS. 1 to 8, the battery pack casing includes an enclosure 1, an upper cover plate 2, a bottom protective plate 3, and a pressure relief valve 5. The bottom protective plate 3 includes an upper plate 31, a lower plate 32, and multiple connecting platforms 33. The multiple connecting platforms 33 are spaced apart from each other and disposed between the upper plate 31 and the lower plate 32 so that a pressure relief chamber is formed between the upper plate 31 and the lower plate 32. The upper plate 31 is configured to carry multiple batteries 100 and has multiple pressure relief holes 311 in one-to-one correspondence with multiple explosion-proof valves on the multiple batteries 100. The pressure relief holes 311 communicate with the pressure relief chamber 34. The bottom protective plate 3 is connected to one side of the enclosure 1. A buffer chamber 11 that communicates with the pressure relief chamber 34 is disposed in the enclosure 1. At least one pressure relief valve 5 is disposed on the enclosure 1 and communicates with the buffer chamber 11. The upper cover plate 2 is connected to another side of the enclosure 1 and cooperates with the bottom protective plate 3 to form an accommodation chamber for accommodating the multiple batteries 100.

Multiple connecting platforms 33 are disposed between the upper plate 31 and the lower plate 32 so that the pressure relief chamber 34 that communicates with pressure relief holes 311 on the upper plate 31 is formed between the upper plate 31 and the lower plate 32. A buffer chamber 11 that communicates with the pressure relief chamber 34 is disposed in the enclosure 1, and at least one pressure relief valve 5 that communicates with the buffer chamber 11 is disposed on the enclosure 1, so that after breaking through explosion-proof valves, the thermal-runaway gas in the battery 100 passes through pressure relief holes 311, enters the pressure relief chamber 34 and the buffer chamber 11 in sequence, and then is released to the outside through the at least one pressure relief valve 5 connected to the enclosure 1. In this manner, not only the internal pressure of the battery 100 can be released but also the escape path of the thermal-runaway gas can be restricted, thus preventing gas movement that damages internal components and enhancing protection and safety.

The battery pack casing may be configured to store various types of batteries 100. In this embodiment, the battery pack casing is primarily configured to store large cylindrical batteries. The upper plate 31 and the lower plate 32 are made of sheet metal. During the assembly of the bottom protective plate 3, multiple connecting platforms 33 are secured to set positions on the lower plate 32 by welding, and then the upper plate 31 is connected to the multiple connecting platforms 33 by welding, forming an integral structure composed of the lower plate 32, the connecting platforms 33, and the upper plate 31, thereby enhancing the structural strength of the bottom protective plate 3.

As shown in FIG. 2, the enclosure 1 includes four lateral plates 13 connected end to end, each lateral plate 13 contains the buffer chamber 11, buffer chambers 11 in the four lateral plates 13 communicate with each other, and the at least one pressure relief valve 5 is connected to any of the four lateral plates 13 and communicates with the corresponding buffer chamber 11. The buffer chambers 11 communicating with each other are disposed in the lateral plates 13 of the enclosure 1 to increase the volume of the buffer chambers having an enhanced buffering capability.

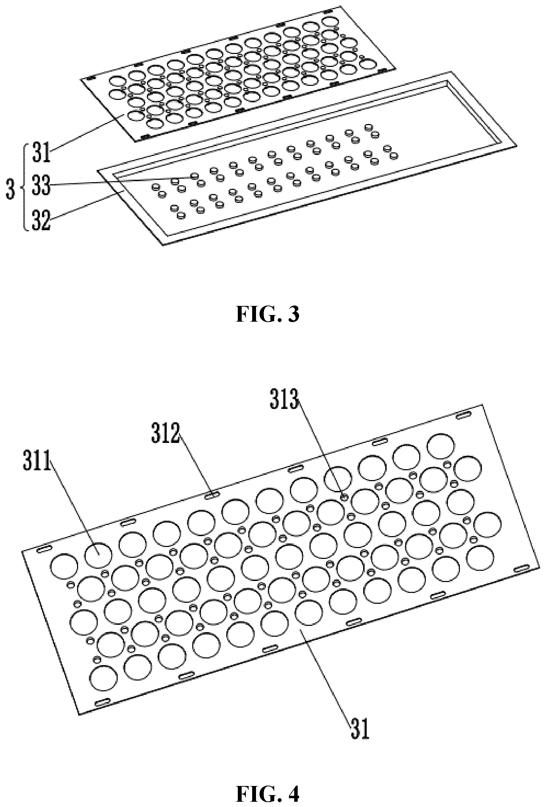

As shown in FIGS. 2 and 4, each lateral plate 13 has a first pressure relief window 12 that communicates with the buffer chamber 11, the upper plate 31 has second pressure relief windows 312 in one-to-one correspondence with first pressure relief windows 12 on the four lateral plates 13, and the second pressure relief windows 312 communicate with the pressure relief chamber 34. The first pressure relief windows 12 that communicate with the buffer chambers 11 and that are disposed on the lateral plates 13 and the second pressure relief windows 312 on the upper plate 31 enable communication between the pressure relief chamber 34 and the buffer chambers 11. In this embodiment, each lateral plate 13 has one first pressure relief window 12, and thus four second pressure relief windows 312 are formed on the upper plate 31 to correspond to the first pressure relief windows 12 one to one. This arrangement accelerates the flow of the thermal-runaway gas from the pressure relief chamber 34 into the buffer chambers 11.

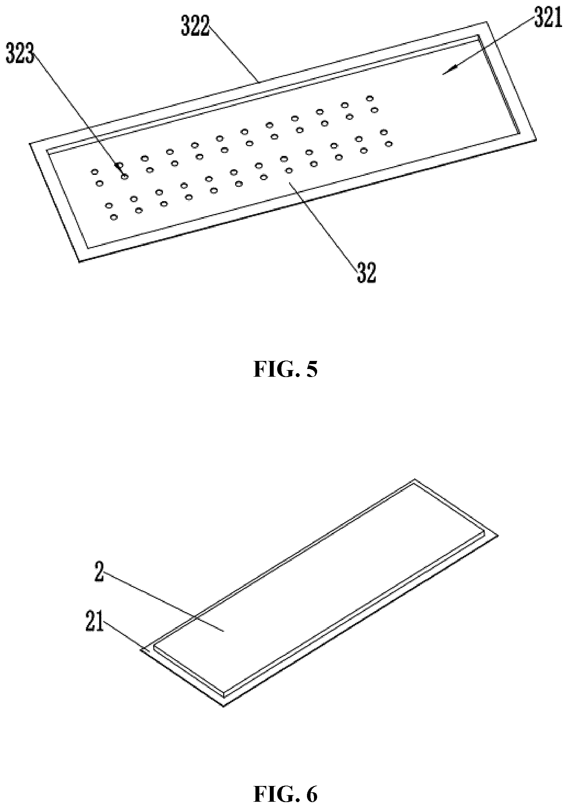

As shown in FIGS. 3 and 5, the lower plate 32 has an accommodation recess 321, the multiple connecting platforms 33 are disposed in the accommodation recess 321, the upper plate 31 is connected to the multiple connecting platforms 33, and the periphery of the upper plate 31 fits against the recess walls of the accommodation recess 321 to seal the accommodation recess 321 to form the pressure relief chamber 34. The accommodation recess 321 on the lower plate 32 facilitates the placement of multiple connecting platforms 33 and aids in forming the pressure relief chamber 34 with the upper plate 31 in the accommodation recess 321. In this embodiment, to facilitate the determination of the positions of the connecting platforms 33 in the accommodation recess 321, positioning holes 323 located in the accommodation recess 321 are disposed on the lower plate 32. The connecting platforms 33 are secured in the positioning holes 323.

As shown in FIG. 5, the lower plate 32 also has a first connecting flange 322 surrounding the accommodation recess 321, and the first connecting flange 322 is connected to the enclosure 1. The first connecting flange 322 on the lower plate 32 increases the area of contact between the bottom cover plate 3 and the enclosure 1. This not only facilitates the connection between the bottom cover plate 3 and the enclosure 1 but also ensures sufficient connection strength between the enclosure 1 and the bottom cover plate 3 after connection. In this embodiment, the first connecting flange 322 may be secured to the enclosure 1 by welding or may be detachably connected to the enclosure 1 by using bolts.

As shown in FIGS. 1 to 4, the upper plate 31 has a first face facing the multiple batteries 100, the first connecting flange 322 has a second face facing the enclosure 1, the horizontal height of the first face of the upper plate 31 in the accommodation recess 321 is lower than the horizontal height of the second face so that a limiting groove 35 is formed on the bottom protective plate 3, a limiting protrusion 14 is disposed on the side of the enclosure 1 facing the bottom protective plate 3, and the limiting protrusion 14 is inserted in the limiting groove 35. The limiting protrusion 14 on the enclosure 1 is inserted in the limiting groove 35 on the bottom protective plate 3, achieving positioning between the enclosure 1 and the bottom protective plate 3; in this manner, more accurate connection between the enclosure 1 and the bottom protective plate 3 can be achieved, and the structural strength after the connection of the enclosure 1 to the bottom protective plate 3 can also be enhanced.

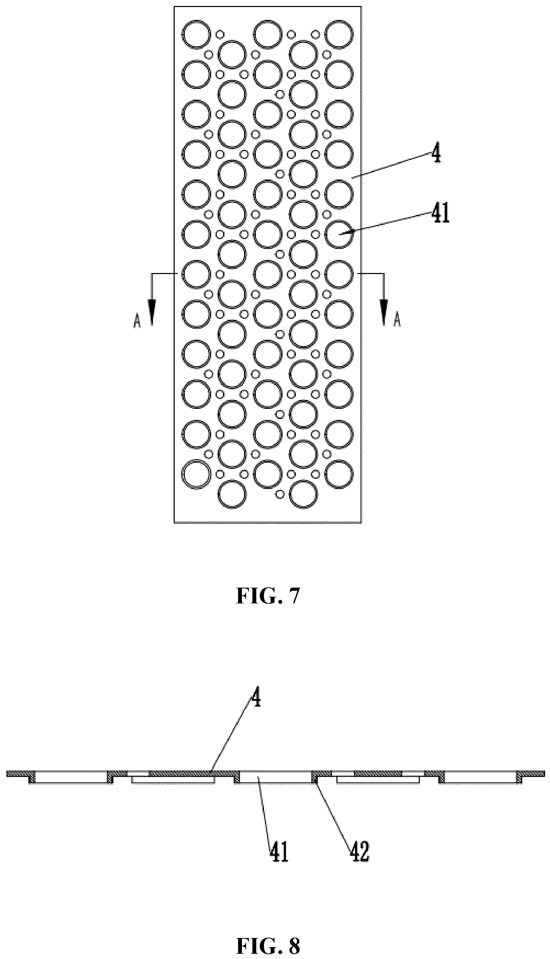

As shown in FIGS. 7 and 8, the battery pack casing also includes a securing support 4, the securing support 4 has multiple mounting holes 41 configured to support the multiple batteries 100, and the multiple mounting holes 41 communicate with the multiple pressure relief holes 311 one to one. The securing support 4 and the mounting holes 41 on the securing support 4 allow for securing and positioning of the batteries 100. The mounting holes 41 correspond to the pressure relief holes 311 one to one so that the explosion-proof valves of the batteries 100 are aligned with the pressure relief holes 311. In this embodiment, the securing support 4 is made of plastic, providing a degree of elasticity for better compatibility and protection of the batteries 100, thereby avoiding damage to the batteries 100 from a securing support 4 made of overly rigid materials.

As shown in FIG. 8, multiple insertion protrusions 42 surrounding the multiple mounting holes 41 are disposed on the side of the securing support 4 facing the upper plate 31, and the multiple insertion protrusions 42 are inserted in the multiple pressure relief holes 311. This arrangement limits the position of the securing support 4 by inserting the insertion protrusions 42 into the pressure relief holes 311, thereby preventing a misalignment between the securing support 4 and the upper plate 31. This misalignment may lead to a misalignment of the batteries 100 and a misalignment between the explosion-proof valves and the pressure relief holes 311.

As shown in FIG. 4, the upper plate 31 also has multiple welding through holes 313 in one-to-one correspondence with the multiple connecting platforms 33. This arrangement facilitates the welding of the connecting platforms 33 to the upper plate 31, making the welding process easier.

As shown in FIG. 6, the upper cover plate 2 has a second connecting flange 21 connected to the enclosure 1. The second connecting flange 21 on the upper cover plate 2 not only facilitates the connection between the upper cover plate 2 and the enclosure 1 but also ensures sufficient connection strength between the enclosure 1 and the upper cover plate 2 after connection. In this embodiment, the second connecting flange 21 may be secured to the enclosure 1 by welding or may be detachably connected to the enclosure 1 by using bolts.

An embodiment provides a battery pack that includes the battery pack casing and uses the battery pack casing to control the thermal-runaway gas, preventing damage to the internal components of the battery pack from the impact of the thermal-runaway gas, improving protection of the internal components and prolonging the service life of the battery pack.

## Claims

1. A battery pack casing, comprising:
a bottom protective plate (3) that comprises an upper plate (31), a lower plate (32), and a plurality of connecting platforms (33), wherein the plurality of connecting platforms (33) are spaced apart from each other and disposed between the upper plate (31) and the lower plate (32) so that a pressure relief chamber (34) is formed between the upper plate (31) and the lower plate (32), the upper plate (31) is configured to support a plurality of batteries (100) and has a plurality of pressure relief holes (311) in one-to-one correspondence with a plurality of explosion-proof valves on the plurality of batteries (100), and the plurality of pressure relief holes (311) communicate with the pressure relief chamber (34);
an enclosure (1), wherein the bottom protective plate (3) is connected to one side of the enclosure (1), and a buffer chamber (11) that communicates with the pressure relief chamber (34) is disposed in the enclosure (1);
at least one pressure relief valve (5) that is disposed on the enclosure (1) and that communicates with the buffer chamber (11); and
a top cover plate (2) that is connected to another side of the enclosure (1) and that cooperates with the bottom protective plate (3) to form an accommodation chamber for accommodating the plurality of batteries (100).

2. The battery pack casing of claim 1, wherein the enclosure (1) comprises four lateral plates (13) connected end to end sequentially, each of the four lateral plates (13) contains the buffer chamber (11), buffer chambers (11) in the four lateral plates (13) communicate with each other, and the at least one pressure relief valve (5) is connected to any of the four lateral plates (13) and communicates with a corresponding buffer chamber (11).

3. The battery pack casing of claim 2, wherein each of the four lateral plates (13) has a first pressure relief window (12) that communicates with the buffer chamber (11), the upper plate (31) has second pressure relief windows (312) in one-to-one correspondence with first pressure relief windows (12) on the four lateral plates (13), and the second pressure relief windows (312) communicate with the pressure relief chamber (34).

4. The battery pack casing of claim 3, wherein the lower plate (32) has an accommodation recess (321), the plurality of connecting platforms (33) are disposed in the accommodation recess (321), the upper plate (31) is connected to the plurality of connecting platforms (33), and a periphery of the upper plate (31) fits against recess walls of the accommodation recess (321) to seal the accommodation recess (321) to form the pressure relief chamber (34).

5. The battery pack casing of claim 4, wherein the lower plate (32) further has a first connecting flange (322) surrounding the accommodation recess (321), and the first connecting flange (322) is connected to the enclosure (1).

6. The battery pack casing of claim 5, wherein the upper plate (31) has a first face facing the plurality of batteries (100), the first connecting flange (322) has a second face facing the enclosure (1), a horizontal height of the first face of the upper plate (31) in the accommodation recess (321) is lower than a horizontal height of the second face so that a limiting groove (35) is formed on the bottom protective plate (3), a limiting protrusion (14) is disposed on a side of the enclosure (1) facing the bottom protective plate (3), and the limiting protrusion (14) is inserted in the limiting groove (35).

7. The battery pack casing of any one of claims 1 to 6, further comprising a securing support (4), wherein the securing support (4) is provided with a plurality of mounting holes (41) configured to support the plurality of batteries (100), and the plurality of mounting holes (41) communicate with the plurality of pressure relief holes (311) one to one.

8. The battery pack casing of claim 7, wherein a plurality of insertion protrusions (42) surrounding the plurality of mounting holes (41) are disposed on a side of the securing support (4) facing the upper plate (31), and the plurality of insertion protrusions (42) are inserted in the plurality of pressure relief holes (311).

9. The battery pack casing of any one of claims 1 to 8, wherein the upper plate (31) is further provided with a plurality of welding through holes (313) in one-to-one correspondence with the plurality of connecting platforms (33).

10. The battery pack casing of any one of claims 1 to 9, wherein the upper cover plate (2) has a second connecting flange (21) connected to the enclosure (1).

11. A battery pack, comprising the battery pack casing of any one of claims 1 to 10.
